# EUROPEAN PATENT APPLICATION

(11) **EP 4 843 394 A1**
(43) Date of publication of application: **25.11.2026**
(21) Application number: 25382513.7
(22) Date of filing: 21.05.2025
(51) Int. Cl.: A23G 1/34, A23L 33/105, A23L 33/22

(54) **CAROB POWDER AND PRODUCTION METHOD THEREOF**

(71) Applicant: Productos Sur, S.L., 30169 San Ginés Murcia (ES)
(72) Inventor: HERNÁNDEZ CÁNOVAS, Juan de Dios, 30169 San Ginés (Murcia) (ES); GUILLÉN LÓPEZ, Isidro, 30169 San Ginés (Murcia) (ES)
(74) Representative: Temiño Ceniceros, Ignacio

(57) **Abstract**

The present invention relates to a carob powder comprising:
- 0.1-1% total fat
- 60-80% dietary fibre,
- 28-32% total sugars,
- 2-5% pinitol
- 0.1-1% total polyphenol content, and preferably, further comprises 5-12% water and 4-6% protein, all percentages being by weight and referring to the total weight of the carob powder.

The present invention also relates to a production method for producing said carob powder and its use as a total or partial substitute for cocoa powder

## Description

### APPLICATION FIELD

The invention falls within the scope of the food industry. More specifically, it relates to a processed product derived from carob.

### BACKGROUND

The steady increase in prices during the year 2024, which increased of more than 150 %, and the limited cocoa resources due to high global demand have led, in recent years, to the need to develop cocoa powder substitutes for use in both food products and dietary supplements (https://tradingeconomics.com/commodity/cocoa).

Carob pods obtained from the carob tree (*Ceratonia siliqua L.*) have traditionally been used to produce flour as they have a flavour reminiscent of cocoa and, therefore, they have been used as substitutes for cocoa powder in chocolate products. However, the strong astringent taste of carob flour due to the presence of soluble tannins means that it has not been a popular choice as a substitute for cocoa powder.

There are currently some patents relating to the production of flour or powder from carob pods, which either have different nutritional characteristics from the powder of the present invention or are obtained by processes completely different from those used in this invention.

Carob flour has been used as a substitute for traditional carob powder in Mediterranean countries. The carob pods are dried after harvesting to reduce their moisture content and crushed to obtain the carob seeds. The seed of the carob tree is the most valuable part of the fruit and is used in the industrial production of locust bean gum, food additive (E-410) which is used as a gelling agent, and thickener. The rest of the carob pod is chopped for the production of carob powder through a grinding, roasting and finally, fine grinding process [1]. This process of producing carob flour is different from the process described in this application because prior to grinding, the chopped carob is infused with water at 37°C for 90 minutes to extract various water-soluble components. This process is essential in order to obtain a carob powder composition of: 5-10% water, 4-6% protein, 1.5-0.5% total fat, 60-70% dietary fibre, 28-32% total sugars, 4-5% D-pinitol and 0.1-0.2% total polyphenol content.

WO2004014150 describes a process for producing a denatured carob flour with low content of soluble tannins and sugars meant for human consumption. The process described in WO2004014150 includes a step of roasting the carob pulp prior to the water extraction process which is not present in the process described in this patent application. Accordingly, there are notable differences in the composition of the final product, such as sugar content, which is 3-10% in the patent WO2004014150, whereas it is 28-32% sugars in the composition described in this application.

Moreover, WO2015063476 describes a method for preparing carob powder that can be used as a full or partial substitute for cocoa powder. However, the process described is completely different from the process described in this patent application since no alkaline compound is added to the carob paste heated to between 60 and 160°C during the production process.

Malted barley is one of the most popular cocoa substitutes, although it has some shortcomings such as providing a smoky or ashy taste, which, together with the lack of bitter taste, means it is not a perfect substitute for cocoa powder.

These defects can be reduced by roasting the barley and/or wheat, such that these cereals can be used as substitutes for cocoa. As described in US 20150.093493A1, the use of these roasted cereals (barley and/or wheat) allows the partial substitution of cocoa by 5-50% by weight, obtaining a product with a dark colour and a taste similar to that of the 100% cocoa product. However, substituting cocoa with roasted cereal does not provide the equivalent content of bioactive molecules such as dietary fibre or polyphenols that are present in cocoa powder.

In the case of carob powder, its dietary fibre content, as well as polyphenol content allows the content of these bioactive molecules to be maintained and even increased despite substituting cocoa powder in the final product. Furthermore, the use of carob powder allows the incorporation of D-pinitol into the final product, which is a polyol capable of regulating postprandial insulin secretion in humans and, therefore, contribute to reducing the risk of developing insulin resistance/type 2 diabetes [2]. Moreover, the absence of stimulants (caffeine and theobromine) and the low fat content of carob powder mean that its use as a substitute for cocoa powder allows the reduction of these compounds in the final product.

### Other cited publications:

1. Brassesco ME, Brandão TRS, Silva CLM, Pintado M. Carob bean (Ceratonia siliqua L.): A new perspective for functional food. Trends Food Sci Technol [Internet]. 2021 Aug;114(March):310-22. Available from: https://linkinghub.elsevier.com/retrieve/pii/S0924224421003745
2. Navarro JA, Díaz C, Decara J, Medina-Vera D, Lopez-Gambero AJ, Suarez J, et al. Pharmacokinetics and Endocrine Effects of an Oral Dose of D-Pinitol in Human Fasting Healthy Volunteers. Nutrients [Internet]. 2022 Oct 1;14(19):4094. Available from: https://www.mdpi.com/2072-6643/14/19/4094

### DESCRIPTION OF THE INVENTION

The present invention relates to a carob powder (PRO-SWEET FIBER) comprising: 0.1-1% total fat, 60-80% dietary fibre, 28-32% total sugars, 2-5% D-pinitol and 0.1-1% total polyphenol content.

According to particular embodiments, the carob powder comprises: 1.5-0.5% total fat, 60-70% dietary fibre, 28-32% total sugars, 4-5% D-pinitol and 0.1-0.2% total polyphenol content.

"Dietary fibre" is the sum of insoluble fibre plus soluble fibre. "Total sugars" is the sum of monosaccharides and polysaccharides.

All percentages in this specification, unless otherwise stated, are percentages by weight and refer to the total weight of the carob powder.

According to particular embodiments, the carob powder comprises:
- 4-12% water, preferably, 5-10% water and
- 4-6% protein.

The product obtained, which is the carob powder (referred to in this document as PRO-SWEET FIBER) defined above, is obtained after drying and grinding the insoluble material obtained after aqueous infusion of the chopped carob pod (*Ceratonia siliqua L.*)*.*

The present invention also relates to a production method for producing the carob powder defined above comprising the following steps:
- performing an aqueous infusion of the chopped carob pod at a temperature equal to or less than 37°C and a contact time comprised between 60 and 100 minutes, preferably between 80 and 95 minutes, and more preferably 90 minutes.
- drying and grinding the insoluble material generated in the previous step.

According to particular embodiments, the production method for producing the carob powder comprises the following steps:
a) performing an aqueous infusion of the carob pod at a temperature equal to or less than 37°C and a contact time comprised between 60 and 100 minutes, preferably between 80 and 95 minutes, and more preferably 90 minutes.
b) pressing the insoluble material obtained in the previous step,
c) drying the insoluble material until a water content below 10% is obtained,
d) grinding the material from the previous step to obtain 90% particles with a size less than 205 µm and
e) sieving the powder obtained from the previous step to obtain a standardised particle size.

The term "standardised" means a size comprised between 100 and 20 microns.

The aqueous infusion of the chopped carob pod can be performed in a continuous or batch reactor, preferably continuous.

In step a), a chopped pod to water ratio of 1 to 8 litres of water per kilogram of chopped pod can be used, preferably 1.5 to 4.5 litres of water per kilogram of chopped pod, more preferably 2 to 4 litres of water per kilogram of chopped pod.

According to particular embodiments, the aqueous infusion is performed in a batch reactor, with a chopped pod to water ratio of 3 to 4.5 litres of water per kilogram of chopped pod, at a temperature of 37°C for 90 minutes.

The high water retention capacity of the carob pod makes a step of separating the aqueous solution from the insoluble plant organic matter necessary, so as to obtain a suitable yield from the aqueous infusion step. This pressing operation can be performed satisfactorily using both industrial roller and piston presses, which can both operate in continuous mode, or by operating the former continuously and the latter discontinuously. The temperature for this pressing operation is between 15 and 35°C and the times depend on the type of press used.

Alternatively, pressing can be performed using a screw-press where what is regulated is not the pressure but the speed which is adjusted according to the production capacity at that moment in order to leave the moisture at the desired percentage.

The pressing step ends when a product is obtained with a moisture content comprised, for example, between 60-70%.

The insoluble plant material from the pressing step is dried to reduce the water content, usually below 10%. This process can be carried out by means of a drying oven, the temperature of which is typically between 90-110°C.

In grinding step d), the particle size achieved is at least below 100 µm (90% of the particles below 100 µm) and usually below 50 µm (90% of the particles below 50 µm).

The type of mill is, for example, an impact mill equipped with screens or classifiers to classify the ground product.

According to further particular embodiments, the method comprises the following steps:
a) performing an aqueous infusion of the chopped carob pod in a batch reactor, with a chopped pod to water ratio of 3 to 4.5 litres of water per kilogram of chopped pod, at a temperature of 37°C for 90 minutes,
b) pressing the insoluble material obtained in the previous step, using both industrial roller and piston presses, operating the first continuously and the second discontinuously at a temperature between 15 and 35°C,
c) drying the insoluble material until a water content below 10% is obtained, by means of a drying oven at a temperature between 90 and 110°C,
d) grinding the material from the previous step to obtain 90% particles with a size less than 205 µm and
e) sieving the powder obtained from the previous step to obtain a particle size such that 90% of the particles have a size below 50 µm.

The carob powder referred to as PRO-SWEET FIBER provides a colour and flavour equivalent to that provided by cocoa powder when added to food products such as beverages or baked goods. This means that it can be used as a full or partial substitute for cocoa powder. With respect to other cocoa substitutes such as roasted cereals, PRO-SWEET FIBER provides a high dietary fibre content, a low fat content and an absence of stimulants such as caffeine or theobromine.

This unique nutritional composition means that it can be used as a full or partial substitute for cocoa powder in the manufacture of food products (beverages and baked goods) and dietary supplements with the aim of significantly increasing the concentration of bioactive compounds such as dietary fibre, and D-pinitol without increasing the fat content of the final product. Furthermore, PRO-SWEET FIBER is free from stimulants such as caffeine and theobromine.

The present invention further relates to the use of the carob powder defined above as a full or partial substitute for cocoa powder in the manufacture of food products (for example, beverages and baked goods) and dietary supplements.

### BRIEF DESCRIPTION OF THE FIGURES

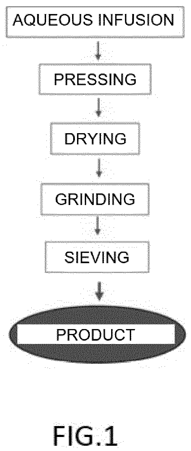

**Figure 1** shows a diagram of the method of the invention.

### EXAMPLES

The production of PRO-SWEET FIBER requires a first step of aqueous infusion of the carob pod and subsequently pressing the infused carob pod, drying it at 105°C and grinding it to a size less than 100 µm.

The results of three independent processes developed to obtain PRO-SWEET FIBER are shown below. In each case, 100 g of chopped carob pods were infused with 435 ml of water at a temperature of 37°C for 90 minutes. The locust bean juice was separated from the solid phase by pressing to be subsequently dried at 105°C. After drying, it was ground and then sieved to a particle size of less than 100 µm.

The values of total polyphenol content (TPC), D-pinitol, sucrose, glucose and fructose of the different samples obtained are shown in table 1 below.

**Table 1. Sugar profile and total polyphenol content (TPC) obtained in different PRO-SWEET FIBER preparations.**

| **Assay** | **Glucose (g/100ml)** | **Fructose (g/100ml)** | **Sucrose (g/100ml)** | **D-Pinitol (g/100ml)** | **TPC (g/100ml))** |
|---|---|---|---|---|---|
| Sample 1 | 1.42 | 2.34 | 27.79 | 3.94 | 0.19 |
| Sample 2 | 2.36 | 2.52 | | 3.94 | 0.23 |
| Sample 3 | 1.80 | 2.50 | 27.43 | 3.86 | 0.23 |

Table 2 below shows the data obtained from the nutritional analysis of the different PRO-SWEET FIBER samples.

**Table 2. Nutritional analysis of the different PRO-SWEET FIBER preparations.**

| | **Sample 1** | **Sample 2** | **Sample 3** |
|---|---|---|---|
| Moisture (g/100 g) | 10.56 | 10.46 | 10.81 |
| Ash (g/100 g) | 3.05 | 3.80 | 2.96 |
| Proteins (g/100 g) | 5.72 | 5.34 | 5.64 |
| Fats (g/100 g) | 0.29 | 0.44 | 0.12 |
| Dietary fibre (g/100 g) | 68.73 | 67.35 | 69.88 |

## Claims

1. A carob powder comprising:
- 0.1-1% total fat
- 60-80% dietary fibre,
- 28-32% total sugars,
- 2-5% pinitol
- 0.1-1% total polyphenol content,
the percentages by weight being in relation to the total weight of the carob powder.

2. The powder according to claim 1, comprising:
- 4-12% moisture and
- 4-6% protein.

3. A production method for producing a carob powder as defined in one of the preceding claims comprising the following steps:
- performing an aqueous infusion of the chopped carob pod at a temperature equal to or less than 37°C and a contact time comprised between 60 and 100 minutes, preferably between 80 and 95 minutes, and more preferably 90 minutes and
- drying and grinding the insoluble material generated in the previous step.

4. The method according to claim 3, comprising the following steps:
a) Aqueous infusion of the carob pod at a temperature equal to or less than 37°C and a contact time comprised between 60 and 100 minutes, preferably between 80 and 95 minutes, and more preferably 90 minutes,
b) pressing the insoluble material obtained in the previous step,
c) drying the pressed insoluble material until a water content below 10% is obtained,
d) grinding the material from the previous step to obtain 90% particles with a size less than 205 µm and
e) sieving the powder obtained from the previous step to obtain a standardised particle size.

5. The method according to claim 4, wherein the aqueous infusion of the chopped carob pod is performed in a continuous or batch reactor.

6. The method according to claim 4 or 5, wherein the aqueous infusion of the chopped carob pod is performed with a chopped pod to water ratio of 1 to 8 litres of water per kilogram of chopped pod.

7. The method according to claim 4, wherein the pressing step is performed using industrial roller and piston presses.

8. The method according to claim 4 or 7, wherein the pressing step is performed between 15 and 35°C.

9. The method according to claim 4, wherein the drying step is performed until the water content is reduced to below 10%.

10. The method according to claim 4 or 9, wherein the drying step is carried out by means of a drying oven, the temperature of which is between 90 and 110°C.

11. The method according to claim 4, wherein a particle size obtained in grinding step d) is such that 90% of the particles have a particle size below 100 µm, and preferably 90% of the particles below 50 µm.

12. A carob powder obtained by the method defined in one of claims 1 or 2.

13. A use of the carob powder defined in one of claims 1 or 2 for use as a full or partial substitute for cocoa powder in the manufacture of food products and dietary supplements.
